# EUROPEAN PATENT SPECIFICATION

(11) **EP 2 963 762 B1**
(45) Date of publication and mention of the grant of the patent: **10.03.2021**
(21) Application number: 15174376.2
(22) Date of filing: 29.06.2015
(51) Int. Cl.: H02J 3/38, H02M 7/48

(54) **FLOATING VOLTAGE SUPPRESSION IN A PV-INVERTER**
UNTERDRÜCKUNG EINER SCHWEBENDEN SPANNUNG IN EINEM PV-WECHSELRICHTER
SUPPRESSION DE LA TENSION FLOTTANTE DANS UN ONDULEUR PV

(30) Priority: 30.06.2014 CN 201410310089
(43) Date of publication of application: 06.01.2016
(73) Proprietor: Sungrow Power Supply Co., Ltd., Hefei, Anhui 230088 (CN)
(72) Inventor: JIN, Linghui, Hefei, Anhui 230088 (CN); YIN, Cong, Hefei, Anhui 230088 (CN); ZENG, Zhihuai, Hefei, Anhui 230088 (CN); ZHANG, Yanhu, Hefei, Anhui 230088 (CN); HU, Bing, Hefei, Anhui 230088 (CN)
(74) Representative: Brevalex

(56) References cited:
- EP-A2- 1 143 594
- US-A1- 2012 187 768

## Description

### FIELD

The present disclosure relates to the technical field of photovoltaic power generation, and in particular to a floating voltage suppression method, a floating voltage suppression device, an inverter control system and a multi-input multi-stage inverter.

### BACKGROUND

A photovoltaic inverter is an energy conversion device for a photovoltaic power generation system, and is configured to convert a direct current generated by a photovoltaic cell panel into an alternating current and send the alternating current to a power grid. For example, European patent application No. EP1143594 A2 discloses power converting apparatus to reliably detect a ground fault of a solar battery. To detect a ground fault position to take an efficient measure against the ground fault, DC power input from a solar battery is converted into AC power and supplied to a system. In a system interconnection inverter (utility connected inverter) having non-insulated input and output, the input voltage of a converter circuit and/or the intermediate voltage between the converter circuit and an inverter circuit are varied to control the potential to ground at each portion of the solar battery to a value other than a value close to zero Among existing photovoltaic inverters, a photovoltaic inverter with both a multi-input and a multi-stage power conversion circuit (which is also referred to as a multi-input multi-stage inverter) is most widely used. In the multi-input multi-stage inverter, the multi-input circuit is connected to multiple first stage of power conversion circuits respectively. For example, US patent publication No. 2012/0187768 A1 discloses such a multi-input multi-stage inverter, which includes DC to DC converters that are connected in parallel to a DC buss that is input to a DC to AC inverter module. Each of the DC to DC converters receives input from one or more DC electrical sources. The inverter module typically comprises a DC to AC power stage that is connectable to an AC buss, and a filter connected between the DC buss and the DC to AC power stage. The filter may comprise one or more capacitors, wherein the capacitors may be chosen based upon the voltage of the DC buss. While the DC buss may have a voltage ripple associated therewith, the DC electrical sources are protected from the DC voltage ripple by their respective converter modules.

In a case that the multi-input multi-stage inverter is in a stand-alone input mode, common ground coupling exists between sampling circuits in the inverter control system, where the sampling circuits are configured to sample respective input voltages. In this case, if some branches of the inverter are not connected to the photovoltaic cell panel and are suspended, floating voltages are formed on the suspended branches. With the presence of the floating voltage, a person has a risk of being electrically shocked, and the inverter control system may make a misjudgment on an operation state of the inverter, thereby influencing the normal operation of the inverter.

There are two existing floating voltage suppression methods as follows.
(1) Discharging resistors are connected in parallel to the inputs respectively, for attritting the floating voltage. However, with this method, the hardware cost is increased and the conversion efficiency of the inverter is lowered.
(2) The respective input voltages are sampled by isolation amplifiers, thereby avoiding the common ground coupling between the sampling circuits, and suppressing the floating voltage from being generated. However, with this method, the hardware cost is increased and the sampling accuracy is reduced.

### SUMMARY

The invention provides a floating voltage suppression method applied to a multi-input multi-stage inverter according to claim 1 and a floating voltage suppression device configured to be applied to a multi-input multi-stage inverter according to claim 5. Preferred embodiments are defined in the dependent claims.

In view of this, a floating voltage suppression method, a floating voltage suppression device is provided, an inverter control system and a multi-input multi-stage inverter in the disclosure, for suppressing a floating voltage on an input side of the multi-input multi-stage inverter without reducing conversion efficiency and sampling accuracy of the inverter and without increasing hardware cost.

A floating voltage suppression method applied to a multi-input multi-stage inverter is provided, where the multi-input multi-stage inverter includes multiple first-stage power conversion circuits at an input side and the method includes:
determining a suspended branch of the multi-input multi-stage inverter, where the suspended branch is a branch for which an input voltage is less than a preset voltage, and the input voltage less than the preset voltage is a floating voltage; and
sending continuously a driving signal for a switching device to a first-stage power conversion circuit of the multi-input multi-stage inverter connected to the suspended branch to drive a switching device of the first-stage power conversion circuit to operate on or off continuously for the first-stage power conversion circuit to pull down the floating voltage, until the suspended branch is connected to a photovoltaic cell panel to cause an input voltage not less than the preset voltage for the suspended branch.

Optionally, before determining a suspended branch of the multi-input multi-stage inverter, the method further includes: determining that the inverter is in a stand-alone input mode, where multiple branches are provided at the input side of the multi-input multi-stage inverter, and in the stand-alone input mode, the multiple branches are independent from each other.

The sending continuously a driving signal for a switching device to a first-stage power conversion circuit of the multi-input multi-stage inverter connected to the suspended branch includes: sending continuously a driving signal for a switching device with adjustable duty cycle to the first-stage power conversion circuit of the multi-input multi-stage inverter connected to the suspended branch.

The preset voltage is a starting voltage of the multi-input multi-stage inverter.

A floating voltage suppression device applied to a multi-input multi-stage inverter is further provided, where the multi-input multi-stage inverter includes multiple first-stage power conversion circuits at an input side and the device includes:
a suspended branch determination unit configured to determine a suspended branch of the multi-input multi-stage inverter, wherein the suspended branch is a branch for which an input voltage is less than a preset voltage, and the input voltage less than the preset voltage is a floating voltage; and
a floating voltage suppression unit connected to the suspended branch determination unit and configured to send continuously a driving signal for a switching device to a first-stage power conversion circuit of the multi-input multi-stage inverter connected to the suspended branch to drive a switching device of the first-stage power conversion circuit to operate on or off continuously for the first-stage power conversion circuit to pull down the floating voltage, until the suspended branch is connected to a photovoltaic cell panel to cause an input voltage not less than the preset voltage for the suspended branch.

Optionally, the floating voltage suppression device further includes an operation mode determination unit connected to the suspended branch determination unit and configured to determine that the multi-input multi-stage inverter is in a stand-alone input mode, where multiple branches are provided at the input side of the multi-input multi-stage inverter, and in the stand-alone input mode, the multiple branches are independent from each other.

The floating voltage suppression unit includes a floating voltage suppression module configured to send continuously a driving signal for a switching device with adjustable duty cycle to the first-stage power conversion circuit of the multi-input multi-stage inverter connected to the suspended branch, until the suspended branch is connected to a photovoltaic cell panel to cause the input voltage not less than the preset voltage for the suspended branch.

The preset voltage is a starting voltage of the multi-input multi-stage inverter.

An inverter control system applied to a multi-input multi-stage inverter is further provided, which includes the floating voltage suppression device as described above.

A multi-input multi-stage inverter is further provided, which includes the inverter control system described above.

It can be seen from the above technical solutions that, with the disclosure, a driving signal for a switching device is continuously sent to a first-stage power conversion circuit of the inverter connected to the suspended branch, to drive the switching device of the first-stage power conversion circuit to operate on or off continuously, thereby attritting the floating voltage on the suspended branch by the first-stage power conversion circuit itself, and suppressing efficiently the floating voltage. Compared with the conventional art, the disclosure does not need to introduce the discharging resistor or the isolation amplifier, but only involves improvement of software, thus no influence is caused to the conversion efficiency, the sampling accuracy or hardware cost of the inverter.

### BRIEF DESCRIPTION OF THE DRAWINGS

The appended drawings to be used in the description of the embodiments or the conventional technology will be described briefly as follows, so that the technical solutions according to the embodiments of the present disclosure or according to the conventional technology will become clearer. It is obvious that the appended drawings in the following description only illustrate some embodiments of the present disclosure. For those skilled in the art, other appended drawings may be obtained according to these appended drawings without any creative work.
Figure 1 is a flowchart of a floating voltage suppression method according to a first embodiment of the disclosure;
Figure 2 is a schematic structural diagram of a multi-input multi-stage inverter in the conventional art;
Figure 3 is a flowchart of a floating voltage suppression method according to a second embodiment of the disclosure; and
Figure 4 is a schematic structural diagram of a floating voltage suppression device according to a third embodiment of the disclosure.

### DETAILED DESCRIPTION OF EMBODIMENTS

The technical solution according to the embodiments of the present disclosure will be described clearly and completely as follows in conjunction with the appended drawings. It is obvious that the described embodiments are only a few rather than all of the embodiments according to the present disclosure. Any other embodiments obtained by those skilled in the art based on the embodiments in the present disclosure without any creative work fall in the scope of the present disclosure.

### First Embodiment

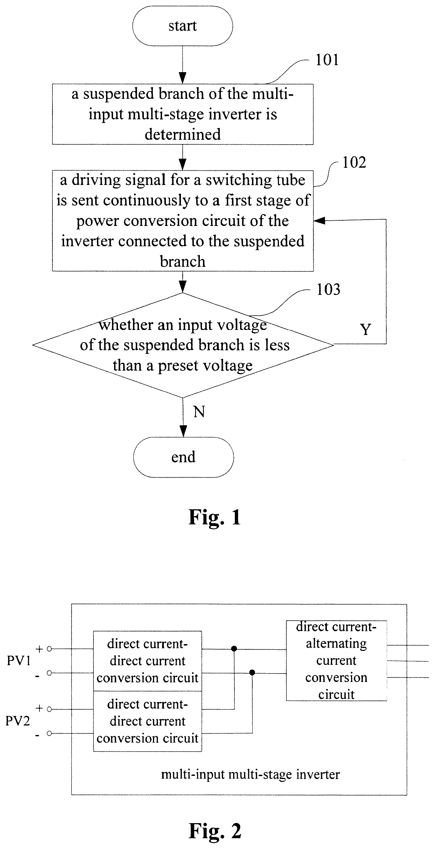

It is disclosed a floating voltage suppression method applied to a multi-input multi-stage inverter in the first embodiment of the disclosure, for suppressing a floating voltage on an input side of the multi-input multi-stage inverter without reducing conversion efficiency and sampling accuracy of the inverter and without increasing hardware cost. Referring to Figure 1, the method includes step 101 to step 103.

In step 101, a suspended branch of the multi-input multi-stage inverter is determined, where the suspended branch is a branch for which an input voltage is less than a preset voltage.

In step 102, a driving signal for a switching device is continuously sent to a first-stage power conversion circuit of the inverter connected to the suspended branch.

In step 103, whether an input voltage for the suspended branch is less than the preset voltage is determined; this floating voltage suppression operation is end if the input voltage of the suspended branch is not less than the preset voltage; it's returned to step 102 if the input voltage for the suspended branch is less than the preset voltage.

The technical solution according to this embodiment will be described in detail hereinafter in conjunction with the topology of the multi-input multi-stage inverter, so that this solution is understood and applied easily by those skilled in the art.

Multiple branches are provided at the input side of the multi-input multi-stage inverter. In a case that the branches are independent from each other (i.e., no connection in series or in parallel exists between the branches), it is determined that the inverter is in the stand-alone input mode, and in this case, common ground coupling is prone to take place between the sampling circuits. The common ground coupling refers to that, when at least one of the branches at the input side of the inverter is connected to the photovoltaic cell panel and certain branches are not connected to the photovoltaic cell panel and are suspended, floating voltages are formed on these floated branches.

Taking Figure 2 as an example, there are two branches, PV1 and PV2, which are independent from each other at the input side of the multi-input multi-stage inverter totally, and each branch is connected to a common direct current-alternating current conversion circuit (i.e. a second-stage power conversion circuit) via a direct current-direct current conversion circuit (i.e., a first-stage power conversion circuit). In this case, if both PV1 and PV2 are connected to the photovoltaic cell panel, the photovoltaic inverter operates normally; and if PV1 is connected to the photovoltaic cell panel and PV2 is suspended, a floating voltage is formed on PV2, interfering normal operation of the inverter.

Since the floating voltage is relatively low, a judgment condition for the suspended branch in this embodiment is set as the input voltage being less than the preset voltage, and it is recognized easily that PV2 is the floating voltage to be determined in step 101 above. Specifically, in step 101, input voltages of the inverter are acquired and it is determined whether the input voltages are less than the preset voltage. If at least one of the input voltages is less than the preset voltage, it is determined that the floating voltage is formed on the input side of the inverter, and suspended branch on which the floating voltage formed is the branch for which the input voltage is less than the preset voltage.

To suppress the floating voltage without increasing the hardware cost, the floating voltage on PV2 is suppressed by improvement of software in above steps 102 and 103. Specifically, in steps 102 and 103, a driving signal for a switching device is sent continuously to the first-stage power conversion circuit connected to PV2 (i.e., the above direct current-direct current conversion circuit), to drive the switching device of PV2 to operate on or off continuously, thereby attritting the floating voltage by the first-stage power conversion circuit itself and pulling down the level of PV2 to zero. When PV2 is connected to the photovoltaic cell panel (in this case, the input voltage for PV2 is not less than the preset voltage), sending a driving signal for a switching device to the first-stage power conversion circuit is stopped. The preset voltage may be set as a starting voltage of the inverter, but is not limited thereto.

It is to be noted that, the greater the duty cycle of the driving signal for a switching device is, the greater the attrition of the first-stage power conversion circuit itself is, and the stronger the suppression effect on the floating voltage. However, if the duty cycle is too great, the normal operation of the inverter is interfered. Thus, the duty cycle is set reasonably based on the actual operation condition of the photovoltaic inverter. Accordingly, in step 102, a driving signal for a switching device with adjustable duty cycle may be sent continuously to the first-stage power conversion circuit connected to the suspended branch.

It can be seen from above that, with this embodiment, a driving signal for a switching device is sent continuously to a first-stage power conversion circuit of the inverter connected to the suspended branch, to drive the switching device of the power conversion circuit to operate on or off continuously, thereby attritting the floating voltages on the suspended branches by the first-stage power conversion circuit itself, and suppressing efficiently the floating voltage. Compared with the conventional art, the disclosure does not need to introduce the discharging resistor or the isolation amplifier, but only involves improvement of software, thus no influence is caused to the conversion efficiency, the sampling accuracy and hardware cost of the inverter.

### Second Embodiment

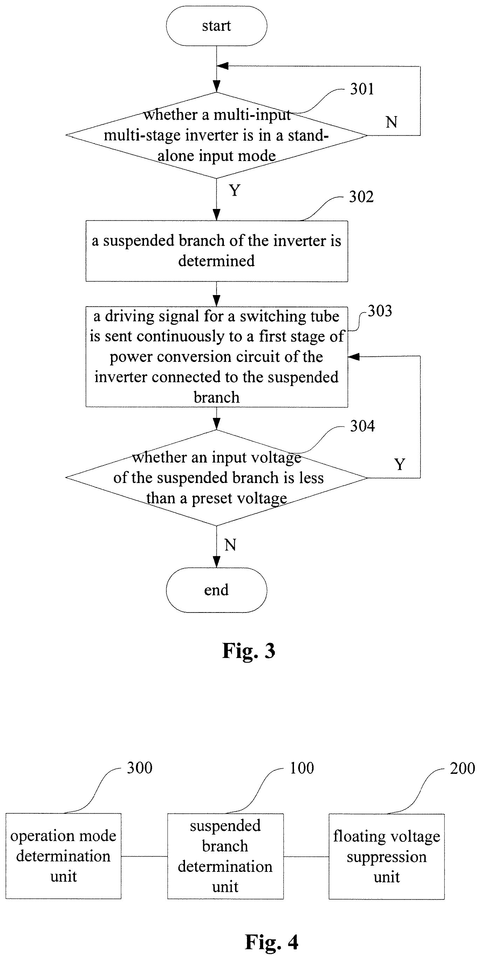

Based on the first embodiment, it is disclosed a more preferable floating voltage suppression method in the second embodiment of the disclosure. Referring to Figure 3, the method includes step 301 to 304.

In step 301, whether the multi-input multi-stage inverter is in a stand-alone input mode is determined, step 302 is proceeded to if it is determined that the inverter is in the stand-alone input mode.

In step 302, a suspended branch of the inverter is determined, where the suspended branch is a branch for which an input voltage is less than a preset voltage.

In step 303, a driving signal for a switching device is sent continuously to a first-stage power conversion circuit of the inverter connected to the suspended branch.

In step 304, whether an input voltage for the suspended branch is less than the preset voltage is determined; this floating voltage suppression operation is ended if the input voltage for the suspended branch is not less than the preset voltage; it's returned to step 303 if the input voltage for the suspended branch is less than the preset voltage.

Compared with the first embodiment, in the second embodiment, before the suspended branch is determined, it is determined that the inverter is in the stand-alone mode. Since the inverter being in the stand-alone mode is the precondition for generating the floating voltage, the method according to the second embodiment proceeds to step 302 only if the precondition is met, thereby maximumly preventing the floating voltage suppression operation from being performed by mistake after the inverter is powered on.

### Third Embodiment

A floating voltage suppression device applied to a multi-input multi-stage inverter is disclosed in the third embodiment of the disclosure, for suppressing a floating voltage at an input side of the multi-input multi-stage inverter without reducing conversion efficiency and sampling accuracy of the inverter and without increasing hardware cost. Referring to Figure 4, the device includes a suspended branch determination unit 100 and a floating voltage suppression unit 200.

The suspended branch determination unit 100 is configured to determine a suspended branch of the inverter, where the suspended branch is a branch for which an input voltage is less than a preset voltage.

The floating voltage suppression unit 200 is connected to the suspended branch determination unit and configured to send a driving signal for a switching device continuously to a first-stage power conversion circuit of the inverter connected to the suspended branch, until an input voltage for the suspended branch is not less than the preset voltage.

The floating voltage suppression unit 200 includes a floating voltage suppression module configured to send a driving signal for a switching device with adjustable duty cycle continuously to a first-stage power conversion circuit of the inverter connected to the suspended branch, until an input voltage of the suspended branch is not less than the preset voltage.

Optionally, referring to Figure 4 again, the floating voltage suppression device further includes an operation mode determination unit 300 connected to the suspended branch determination unit 100 and configured to determine that the inverter is in a stand-alone input mode.

### Fourth Embodiment

An inverter control system applied to a multi-input multi-stage inverter is disclosed in the fourth embodiment of the disclosure, for suppressing a floating voltage at an input side of the multi-input multi-stage inverter without reducing conversion efficiency and sampling accuracy of the inverter and without increasing hardware cost. Specifically, the inverter control system is configured to: determine a suspended branch of the inverter, where the suspended branch is a branch for which an input voltage is less than a preset voltage; and send a driving signal for a switching device continuously to a first-stage power conversion circuit of the inverter connected to the suspended branch, until an input voltage for the suspended branch is not less than the preset voltage.

Optionally, the inverter control system is further configured to determine that the input voltage for the suspended branch is not less than the preset voltage before the suspended branch of the inverter is determined. The preset voltage may be set as a starting voltage of the inverter.

Further, a multi-input multi-stage inverter including any one of the above inverter control systems is disclosed.

With the disclosure, a driving signal for a switching device is sent continuously to a first-stage power conversion circuit of the inverter connected to the suspended branch, to drive the switching device of the power conversion circuit to operate on or off continuously, thereby attritting the floating voltages on the suspended branches by the first-stage power conversion circuit itself, and suppressing efficiently the floating voltage. Compared with the conventional art, the disclosure does not need to introduce the discharging resistor or the isolation amplifier, but only involves improvement of software, thus no influence is caused to the conversion efficiency, the sampling accuracy and hardware cost of the inverter.

The embodiments in this specification are described in a progressive way, each of which emphasizes the differences from others, and the same or similar parts among the embodiments can be referred to each other. Since the floating voltage suppression device, the inverter control system and the multi-input multi-stage inverter disclosed in the embodiments corresponds to the floating voltage suppression method therein, the description thereof is relatively simple, and for relevant matters, references may be made to the description of the method.

## Claims

1. A floating voltage suppression method applied to a multi-input multi-stage inverter, the multi-input multi-stage inverter comprising a plurality of first-stage power conversion circuits at an input side, the method comprising:
determining a suspended branch of the multi-input multi-stage inverter, wherein the suspended branch is a branch for which an input voltage is less than a preset voltage, and the input voltage less than the preset voltage is a floating voltage; and
sending continuously a driving signal for a switching device to a first-stage power conversion circuit of the multi-input multi-stage inverter connected to the suspended branch to drive the switching device of the first-stage power conversion circuit to operate on or off continuously for the first-stage power conversion circuit to pull down the floating voltage, until the suspended branch is connected to a photovoltaic cell panel to cause an input voltage not less than the preset voltage for the suspended branch .

2. The floating voltage suppression method according to claim 1, wherein before determining a suspended branch of the multi-input multi-stage inverter, the method further comprises:
determining that the multi-input multi-stage inverter is in a stand-alone input mode, wherein a plurality of branches is provided at the input side of the multi-input multi-stage inverter, and in the stand-alone input mode, the plurality of branches is independent from each other.

3. The floating voltage suppression method according to claim 1 or 2, wherein sending continuously the driving signal for the switching device to the first-stage power conversion circuit of the multi-input multi-stage inverter connected to the suspended branch comprises:
sending continuously a driving signal for the switching device with adjustable duty cycle to the first-stage power conversion circuit of the multi-input multi-stage inverter connected to the suspended branch.

4. The floating voltage suppression method according to claim 1, wherein the preset voltage is a starting voltage of the multi-input multi-stage inverter.

5. A floating voltage suppression device configured to be applied to a multi-input multi-stage inverter, the multi-input multi-stage inverter comprising a plurality of first-stage power conversion circuits at an input side, the device comprising:
a suspended branch determination unit (100) configured to determine a suspended branch of the multi-input multi-stage inverter, wherein the suspended branch is a branch for which an input voltage is less than a preset voltage, and the input voltage less than the preset voltage is a floating voltage; and
a floating voltage suppression unit (200) connected to the suspended branch determination unit and configured to send continuously a driving signal for a switching device to a first-stage power conversion circuit of the multi-input multi-stage inverter connected to the suspended branch to drive the switching device of the first-stage power conversion circuit to operate on or off continuously for the first-stage power conversion circuit to pull down the floating voltage, until the suspended branch is connected to a photovoltaic cell panel to cause an input voltage not less than the preset voltage for the suspended branch.

6. The floating voltage suppression device according to claim 5, further comprising an operation mode determination unit (300) connected to the suspended branch determination unit and configured to determine that the multi-input multi-stage inverter is in a stand-alone input mode, wherein a plurality of branches is provided at the input side of the multi-input multi-stage inverter, and in the stand-alone input mode, the plurality of branches is independent from each other.

7. The floating voltage suppression device according to claim 5 or 6, wherein the floating voltage suppression unit (200) comprises a floating voltage suppression module configured to send continuously a driving signal for the switching device with adjustable duty cycle to the first-stage power conversion circuit of the multi-input multi-stage inverter connected to the suspended branch, until the suspended branch is connected to a photovoltaic cell panel to cause an input voltage not less than the preset voltage for the suspended branch.

8. The floating voltage suppression device according to claim 5, wherein the preset voltage is a starting voltage of the multi-input multi-stage inverter.

9. An inverter control system comprising the floating voltage suppression device according to claim 5.

10. A multi-input multi-stage inverter, comprising the inverter control system according to claim 9.

## Patentansprüche

1. Verfahren zur Unterdrückung einer Schwebespannung, das auf einen vielstufigen Inverter mit mehreren Eingängen angewandt wird, wobei der vielstufige Inverter mit mehreren Eingängen eine Mehrzahl von Stromkonversionsschaltungen erster Stufe an einer Eingangsseite umfasst, wobei das Verfahren umfasst:
Bestimmen eines aufgehängten Zweigs des vielstufigen Inverters mit mehreren Eingängen, wobei der aufgehängte Zweig ein Zweig ist, für den eine Eingangsspannung kleiner als eine voreingestellte Spannung ist, und die Eingangsspannung kleiner als die voreingestellte Spannung eine Schwebespannung ist; und
kontinuierliches Senden eines Treibsignals für eine Schaltvorrichtung zu einer Stromkonversionsschaltung erster Stufe des vielstufigen Inverters mit mehreren Eingängen, der mit dem aufgehängten Zweig verbunden ist, um die Schaltvorrichtung der Stromkonversionsschaltung erster Stufe kontinuierlich ein oder aus zu betreiben, damit die Stromkonversionsschaltung erster Stufe die Schwebespannung herabzieht, bis der aufgehängte Zweig mit einem photovoltaischen Zellenpaneel verbunden wird, um eine Eingangsspannung nicht kleiner als die voreingestellte Spannung für den aufgehängten Zweig zu bewirken.

2. Verfahren zur Unterdrückung einer Schwebespannung nach Anspruch 1, wobei das Verfahren vor der Bestimmung eines aufgehängten Zweigs des vielstufigen Inverters mit mehreren Eingängen ferner umfasst:
Bestimmen, dass der vielstufige Inverter mit mehreren Eingängen in einem eigenständigen Eingabemodus ist, wobei eine Mehrzahl von Zweigen an der Eingangsseite des vielstufigen Inverters mit mehreren Eingängen vorgesehen ist, und wobei die Mehrzahl von Zweigen in dem eigenständigen Eingabemodus unabhängig voneinander sind.

3. Verfahren zur Unterdrückung einer Schwebespannung nach Anspruch 1 oder 2, wobei das kontinuierliche Senden des Treibsignals für die Schaltvorrichtung zu der Stromkonversionsschaltung erster Stufe des vielstufigen Inverters mit mehreren Eingängen, der mit dem aufgehängten Zweig verbunden ist, umfasst:
kontinuierliches Senden eines Treibsignals für die Schaltvorrichtung mit einstellbarer Einschaltdauer zu der Stromkonversionsschaltung erster Stufe des vielstufigen Inverters mit mehreren Eingängen, der mit dem aufgehängten Zweig verbunden ist.

4. Verfahren zur Unterdrückung einer Schwebespannung nach Anspruch 1, wobei die voreingestellte Spannung eine Startspannung des vielstufigen Inverters mit mehreren Eingängen ist.

5. Vorrichtung zur Unterdrückung einer Schwebespannung, die dazu konfiguriert ist, bei einem vielstufigen Inverter mit mehreren Eingängen angewandt zu werden, wobei der vielstufige Inverter mit mehreren Eingängen eine Mehrzahl von Stromkonversionsschaltungen erster Stufe an einer Eingangsseite umfasst, wobei die Vorrichtung umfasst:
eine Einheit (100) zur Bestimmung eines aufgehängten Zweigs, die dazu konfiguriert ist, einen aufgehängten Zweig des vielstufigen Inverters mit mehreren Eingängen zu bestimmen, wobei der aufgehängte Zweig ein Zweig ist, für den eine Eingangsspannung kleiner als eine voreingestellte Spannung ist, und die Eingangsspannung kleiner als die voreingestellte Spannung eine Schwebespannung ist; und
eine Einheit (200) zur Unterdrückung einer Schwebespannung, die mit der Einheit zur Bestimmung des aufgehängten Zweigs verbunden und dazu konfiguriert ist, kontinuierlich ein Treibsignal für eine Schaltvorrichtung zu einer Stromkonversionsschaltung erster Stufe des vielstufigen Inverters mit mehreren Eingängen zu senden, der mit dem aufgehängten Zweig verbunden ist, um die Schaltvorrichtung der Stromkonversionsschaltung erster Stufe kontinuierlich ein oder aus zu betreiben, damit die Stromkonversionsschaltung erster Stufe die Schwebespannung herabzieht, bis der aufgehängte Zweig mit einem photovoltaischen Zellenpaneel verbunden wird, um eine Eingangsspannung nicht kleiner als die voreingestellte Spannung für den aufgehängten Zweig zu bewirken.

6. Vorrichtung zur Unterdrückung einer Schwebespannung nach Anspruch 5, ferner umfassend eine Einheit (300) zur Bestimmung eines Operationsmodus, die mit der Einheit zur Bestimmung eines aufgehängten Zweigs verbunden und dazu konfiguriert ist zu bestimmen, dass der vielstufige Inverter mit mehreren Eingängen in einem eigenständigen Eingabemodus ist, wobei eine Mehrzahl von Zweigen an der Eingangsseite des vielstufigen Inverters mit mehreren Eingängen vorgesehen ist, und wobei die Mehrzahl von Zweigen in dem eigenständigen Eingabemodus unabhängig voneinander sind.

7. Vorrichtung zur Unterdrückung einer Schwebespannung nach Anspruch 5 oder 6, wobei die Einheit (200) zur Unterdrückung einer Schwebespannung ein Modul zur Unterdrückung einer Schwebespannung umfasst, das dazu konfiguriert ist, kontinuierlich ein Treibsignal für die Schaltvorrichtung mit einstellbarer Einschaltdauer zu der Stromkonversionsschaltung erster Stufe des vielstufigen Inverters mit mehreren Eingängen zu senden, der mit dem aufgehängten Zweig verbunden ist, bis der aufgehängte Zweig mit einem photovoltaischen Zellenpaneel verbunden wird, um eine Eingangsspannung nicht kleiner als die voreingestellte Spannung für den aufgehängten Zweig zu bewirken.

8. Vorrichtung zur Unterdrückung einer Schwebespannung nach Anspruch 5, wobei die voreingestellte Spannung eine Startspannung des vielstufigen Inverters mit mehreren Eingängen ist.

9. Invertersteuersystem, umfassend die Vorrichtung zur Unterdrückung einer Schwebespannung nach Anspruch 5.

10. Vielstufiger Inverter mit mehreren Eingängen, umfassend das Invertersteuersystem nach Anspruch 9.

## Revendications

1. Procédé de suppression de tension flottante appliqué à un onduleur à entrées multiples et étages multiples, l'onduleur à entrées multiples et étages multiples comprenant une pluralité de circuits de conversion de puissance de premier étage au niveau d'un côté entrée, le procédé comprenant :
la détermination d'une branche suspendue de l'onduleur à entrées multiples et étages multiples, dans lequel la branche suspendue est une branche pour laquelle une tension d'entrée est inférieure à une tension prédéfinie, et la tension d'entrée inférieure à la tension prédéfinie est une tension flottante ; et
l'envoi en continu d'un signal de pilotage pour un dispositif de commutation à un circuit de conversion de puissance de premier étage de l'onduleur à entrées multiples et étages multiples connecté à la branche suspendue pour piloter la mise sous tension ou hors tension en continu du dispositif de commutation du circuit de conversion de puissance de premier étage pour permettre au circuit de conversion de puissance de premier étage d'abaisser la tension flottante, jusqu'à ce que la branche suspendue soit connectée à un panneau de cellules photovoltaïques afin d'entraîner une tension d'entrée non inférieure à la tension prédéfinie pour la branche suspendue.

2. Procédé de suppression de tension flottante selon la revendication 1, dans lequel avant la détermination d'une branche suspendue de l'onduleur à entrées multiples et étages multiples, le procédé comprend en outre :
la détermination du fait que l'onduleur à entrées multiples et étages multiples est dans un mode d'entrée autonome, dans lequel une pluralité de branches sont prévues au niveau du côté entrée de l'onduleur à entrées multiples et étages multiples, et dans le mode d'entrée autonome, la pluralité de branches sont indépendantes les unes des autres.

3. Procédé de suppression de tension flottante selon la revendication 1 ou 2, dans lequel l'envoi en continu du signal de pilotage pour le dispositif de commutation au circuit de conversion de puissance de premier étage de l'onduleur à entrées multiples et étages multiples connecté à la branche suspendue comprend :
l'envoi en continu d'un signal de pilotage pour le dispositif de commutation avec un rapport cyclique ajustable au circuit de conversion de puissance de premier étage de l'onduleur à entrées multiples et étages multiples connecté à la branche suspendue.

4. Procédé de suppression de tension flottante selon la revendication 1, dans lequel la tension prédéfinie est une tension de départ de l'onduleur à entrées multiples et étages multiples.

5. Dispositif de suppression de tension flottante configuré pour être appliqué à un onduleur à entrées multiples et étages multiples, l'onduleur à entrées multiples et étages multiples comprenant une pluralité de circuits de conversion de puissance de premier étage au niveau d'un côté entrée, le dispositif comprenant :
une unité de détermination de branche suspendue (100) configurée pour déterminer une branche suspendue de l'onduleur à entrées multiples et étages multiples, dans lequel la branche suspendue est une branche pour laquelle une tension d'entrée est inférieure à une tension prédéfinie, et la tension d'entrée inférieure à la tension prédéfinie est une tension flottante ; et
une unité de suppression de tension flottante (200) connectée à l'unité de détermination de branche suspendue et configurée pour envoyer en continu un signal de pilotage pour un dispositif de commutation à un circuit de conversion de puissance de premier étage de l'onduleur à entrées multiples et étages multiples connecté à la branche suspendue pour piloter la mise sous tension ou hors tension en continu du dispositif de commutation du circuit de conversion de puissance de premier étage pour permettre au circuit de conversion de puissance de premier étage d'abaisser la tension flottante, jusqu'à ce que la branche suspendue soit connectée à un panneau de cellules photovoltaïques afin d'entraîner une tension d'entrée non inférieure à la tension prédéfinie pour la branche suspendue.

6. Dispositif de suppression de tension flottante selon la revendication 5, comprenant en outre une unité de détermination de mode de fonctionnement (300) connectée à l'unité de détermination de branche suspendue et configurée pour déterminer que l'onduleur à entrées multiples et étages multiples est dans un mode d'entrée autonome, dans lequel une pluralité de branches sont prévues au niveau du côté entrée de l'onduleur à entrées multiples et étages multiples, et dans le mode d'entrée autonome, la pluralité de branches sont indépendantes les unes des autres.

7. Dispositif de suppression de tension flottante selon la revendication 5 ou 6, dans lequel l'unité de suppression de tension flottante (200) comprend un module de suppression de tension flottante configuré pour envoyer en continu un signal de pilotage pour le dispositif de commutation avec un rapport cyclique ajustable au circuit de conversion de puissance de premier étage de l'onduleur à entrées multiples et étages multiples connecté à la branche suspendue, jusqu'à ce que la branche suspendue soit connectée à un panneau de cellules photovoltaïques afin d'entraîner une tension d'entrée non inférieure à la tension prédéfinie pour la branche suspendue.

8. Dispositif de suppression de tension flottante selon la revendication 5, dans lequel la tension prédéfinie est une tension de départ de l'onduleur à entrées multiples et étages multiples.

9. Système de commande d'onduleur comprenant le dispositif de suppression de tension flottante selon la revendication 5.

10. Onduleur à entrées multiples et étages multiples, comprenant le système de commande d'onduleur selon la revendication 9.
